# EUROPEAN PATENT SPECIFICATION

(11) **EP 0 472 679 B1**
(45) Date of publication and mention of the grant of the patent: **03.12.1997**
(21) Application number: 91903778.8
(22) Date of filing: 10.01.1991
(51) Int. Cl.: B32B 27/00, B29C 49/24, G09F 3/04

(54) **LABELSTOCK FOR IN-MOLD LABELING**
FÜR IN DER FORM-ETIKETTIERUNG VERWENDBARES ROHMATERIAL FÜR ETIKETTEN
BLOC DE MATERIAU BRUT POUR ETIQUETTES UTILISABLE LORS D'OPERATIONS D'ETIQUETAGE EN COURS DE MOULAGE

(30) Priority: 26.02.1990 US 485333
(43) Date of publication of application: 04.03.1992
(73) Proprietor: THE DOW CHEMICAL COMPANY, Midland, Michigan 48674 (US)
(72) Inventor: TUNG, Harvey, C., Newark, OH 43055 (US)
(74) Representative: Sternagel, Hans-Günther, Dr.
(86) International application number: US9100212
(87) International publication number: WO9112961

(56) References cited:
- DE-A- 1 807 766
- FR-A- 2 325 678
- US-A- 4 837 075
- US-A- 4 883 697
- US-E- 32 929

## Description

The present invention relates to labelstock, and particularly to polymeric labelstocks for in-mold labeling, wherein good die-cuttability, printability, and/or contact clarity are desirable.

The conversion of labelstock into labels for in-mold labeling involves the printing, sheeting, stacking, and die-cutting of the labelstock on a high type die cutter. A number of commercially desirable filmstocks exhibit an economically significant degree of edge welding between adjacent stacked sheets of film in die-cutting on such apparatus, however, such that individual labels cannot be properly formed and dispensed in the in-mold labeling process.

Consequently, polyethylene and a number of other extensible, inexpensive film materials have not heretofore proven to be economically useful alternatives for in-mold labeling, unless modified in some fashion so that the filmstock to be die-cut possesses a tensile ultimate elongation in both the machine and tensile directions, as determined by ASTM D-882, on the order of 10 percent or less, and especially on the order of 50 percent or less. Some labelstocks, notably some polystyrene labelstocks, have die cut acceptably at the label thicknesses typically employed (that is, 3 to 4 mils) in the in-mold labeling industry even with tensile ultimate elongations of from 45 to 50 percent, but for labelstocks generally it is considered that the lower figures represent an acceptable degree of extensibility at these typical thicknesses and in the commercial in-mold labeling processes.

Usually the films displaying an acceptably low tensile ultimate elongation are either very highly biaxially oriented or are highly filled with inorganic fillers, or possess a voided structure. Achieving a high degree of biaxial orientation requires comparatively expensive machinery relative to conventional blown and cast film apparatus. Highly filled filmstocks and those with a voided structure generally have a roughened surface which is not amenable to printing and exhibit poor contact clarity.

Recently-issued United States Patent No. 4,883,697 (the '697 patent) to Dornbusch et al. discloses a label for in-mold labeling wherein a thermoplastic label stratum is joined by coextrusion or preferably by an intervening adhesive layer to a stress-compensating stratum. The stress-compensating stratum is coated with a low temperature sealant layer such as the ethylene-vinyl acetate copolymer-paraffin-microcrystalline wax mixture described in United States Patent No. 3,573,125 to Elliott. The thermoplastic label stratum can be polypropylene or other materials having a Young's modulus of greater than 100,000 psi, while the stress-accommodating stratum can be formed from materials such as low density polyethylene or ethylene-vinyl acetate copolymers having a Young's modulus of less than 40,000 psi.(26-7 10⁷ Pa).

The '697 patent does not teach or suggest, however, an acceptable, wholly extrudable film labelstock which utilizes the edge-welding but inexpensive materials such as high density polyethylene, and which further presents a smooth surface for printing and excellent contact clarity.

US-A-4837075 refers to a label particularly adapted for use in in-mold labeling of blow-molded polyethylene containers comprising a heat activatable ethylene polymer adhesive layer and a surface printable polystyrene layer with optional intermediate layers to provide interlayer adhesion.

In FR-A-2325678 a packaging film composite and packaged articles therewith, whereby said packaged articles include unvulcanized rubber compounding ingredients for unvulcanized rubber and compounding ingredients for thermoplastic polymers is described. Said packaged film composite is comprised of (1) an unvulcanized elastomeric block copolymer, (2) an antiblock agent selected from (A) stearyl erucamide and behenamide, (B) oleyl palmitamide and behenamide and (C) stearyl erucamide, oleyl palmitamide and behenamide, and, preferably, (3) a thermoplastic resin characterized by being soluble in styrene.

The present invention provides a film labelstock which overcomes the shortcomings of the prior art relating to labelstock for in-mold labeling.

In one aspect, the present invention relates to a film label stock characterized by a tensile ultimate elongation of at least 10 percent in one or both of the machine and transverse directions when measured according to ASTM D-882, having a surface printable layer comprising a thermoplastic materials fraction selected from the group consisting of homopolymers of the olefins, copolymers of two or more of the olefins, and mixtures of such homopolymers and/or copolymers and having additionally one or more slip additives incorporated in the labelstock.

In another aspect, the invention relates to a label manufactured from that labelstock and to an article to which the label is applied, and more particularly relates to labels wherein an inner surface of a surface printable layer carries printed matter rather than an exposed outer surface of the label. "Inner" and "outer" in this respect are thus understood as being determined relative to an article to which the label is applied, and to the opportunity for the environment in which the label is used to act upon the printed matter.

In still another aspect, the invention provides a process for inhibiting edge welding in the die cutting on a high type die cutter of stacked sheets of extrudable film materials characterized by a tensile ultimate elongation in one or both of the machine and transverse directions of at least 10 percent according to ASTM D-882, comprising the step of incorporating in the film material one or more slip additives and particularly in the die-cutting of film labelstocks so characterized for in-mold labeling.

The extrudable film labelstock of the present invention is capable of being manufactured in a wide variety of embodiments and with a variety of materials, as will be readily appreciated.

In a comparatively simple embodiment, the film labelstock will consist of a surface printable layer as defined above, with the surface printable layer having the one or more slip additives incorporated therein in an amount sufficient to permit the labelstock to be die cut on a high type die cutter without a significant degree of edge-welding between stacked sheets of the labelstock.

Some degree of edge-welding is permissible. What is essentially expressed in the term "without a significant degree of edge-welding" is the idea that the labelstock of the present invention should not possess the extent of edge-welding which has heretofore made the use of film materials having a tensile ultimate elongation (per ASTM D-882) of at least a certain percentage and greater economically and practically infeasible.

In this regard, the film labelstock of the present invention should preferably realize at least a twenty-fold reduction in edge-welding over that experienced with a labelstock identically constructed and processed but for the omission of the one or more slip additives therefrom. Most preferably, the film labelstock with the slip additives incorporated therein should realize at least a thousand-fold improvement in edge-welding over a labelstock omitting these slip additives.

The degree of edge-welding for purposes of this comparison is defined by the percentage of edge-welded sheets of a given 3.5 to 5.0 mil (88.9 µm to 127.0 µm) thick, unprinted labelstock when cut on a high type die cutter.

In addition to the aforementioned slip additives, the surface printable layer will also be comprised of a thermoplastic materials fraction selected from the group consisting of homopolymers of the olefins, copolymers of two or more of the olefins, and mixtures of such homopolymers and/or copolymers. Thus, for example, the surface printable layer may comprise in addition to the one or more slip additives a mixture of low density polyethylene and polypropylene, or a mixture of an ethylene copolymer with polypropylene homopolymer, or a mixture of one ethylene copolymer with a different ethylene copolymer, so long as the surface printable layer retains a tensile ultimate elongation of at least 10 percent in one or both of the machine and transverse directions, as determined by ASTM D-882.

For a thermoplastic materials fraction constituted as described in the preceding paragraph, it is considered that slip additives selected from the group consisting of stearamide, erucylamide, oleyl palmitamide, and stearyl stearamide, especially from 0.15 to 1.0 percent by weight of such slip additives (based on the weight of the surface printable layer), will be useful for achieving an edge-weld inhibiting concentration of slip additives at the interface between adjacent sheets of stacked 3.5 to 5.0 mil (88.9 µm to 127.0 µm) thick, unprinted labelstock and thus acceptable levels of die-cuttability on a high type die cutter, without at the same time rendering the surface of the labelstock unsuitable for printing.

The thermoplastic materials fraction of the surface printable layer and thus of the film labelstock is more preferably comprised of low density polyethylene, medium density polyethylene, high density polyethylene, or mixtures thereof. Where the thermoplastic materials fraction is at least 25 percent by weight, and most preferably 100 percent by weight of high density polyethylene, it is expected that the twenty-fold improvement in edge-welding alluded to earlier will be possible with the incorporation of at least 0.25 percent by weight of slip additives during extrusion of the surface printable layer. It is further expected that the most preferred thousand-fold improvement will be possible with the addition of at least 0.50 percent by weight of the slip additives, the slip additives again being selected from the group consisting of stearamide, erucylamide, oleyl palmitamide, and stearyl stearamide.

The surface printable layer in this most preferred embodiment can also contain from 0 to 20 percent by weight of a pigment such as titanium dioxide.

In sum, the simple embodiment wherein the film labelstock consists of a surface printable layer would, in a most preferred embodiment, contain: at least 0.5 percent but not more than 1.0 percent by total weight of slip additives selected from the group consisting of stearamide, erucylamide, oleyl palmitamide, and stearyl stearamide; a thermoplastic materials fraction of at least 25 percent and preferably 100 percent by weight of high density polyethylene; and from 0 to 20 percent by total weight of titanium dioxide.

In another embodiment, the film labelstock is again characterized by a tensile ultimate elongation in one or both of the machine or transverse directions of at least 10 percent, but comprises a surface printable layer of a first film material and a supporting layer of a second material. The surface printable layer and the supporting layer in this embodiment define first and second outer surfaces, respectively, of the film labelstock, such that when the film labelstock of this embodiment is sheeted and stacked the surface printable layer of a first sheet will be placed in intimate contact with the supporting layer of a second sheet of labelstock.

The surface printable layer and the supporting layer collectively contain a sufficient amount of one or more slip additives in the first and second materials comprising such layers so that adjacent stacked sheets of labelstock are not edge-welded to a significant degree. Generally the one or more slip additives will be present in a combined amount of from 0.15 to 1.0 percent by weight of the combined weights of the surface printable layer and the supporting layer.

Preferably the surface printable layer is in this embodiment substantially as described in the simpler embodiment detailed above, with the first material thus comprising a thermoplastic materials fraction which is most preferably from at least 25 percent to 100 percent by weight of high density polyethylene, and containing from 0 to 20 percent by weight of the layer of a pigment such as titanium dioxide.

The supporting layer in a preferred embodiment is a heat activatable adhesive substrate layer of the type described in commonly-assigned United States Patent No.4,837,075 to Dudley. Briefly, however, the second film material in this preferred embodiment of the supporting layer comprises a polymeric fraction selected from the group consisting of: (a) homopolymers of ethylene; (b) copolymers of ethylene with one or more alpha olefins having from 4 to 8 carbons; (c) mixtures of (a) and (b); and (d) mixtures of either (a), (b), or (c) with up to about 95 percent by weight of one or more copolymers of ethylene and from about 1 percent to about 30 percent by weight of a copolymerizable ethylenically unsaturated carboxylic acid or ester containing comonomer. Most preferably, the heat activatable adhesive substrate layer will be comprised of a mixture falling into the (d) group of mixtures, wherein the mixture will contain more than 35 percent by weight of one or more ethylene-vinyl acetate copolymers.

The most preferred embodiment of the at least two layer construction of the film labelstock of the present invention, in other words of the embodiment having at least a surface printable layer defining a first outer surface of the labelstock and a supporting, heat activatable adhesive substrate layer defining a second opposing outer surface of the labelstock, would have a surface printable layer consisting of at least 25 percent, and preferably 100 percent, by weight of high density polyethylene.

The remainder of the surface printable layer would comprise from 0 to 75 percent by weight of other materials selected from the group consisting of pigments, slip additives selected from stearamide, erucylamide, oleyl palmitamide, and stearyl stearamide, and other ethylene homopolymers and copolymers.

The heat activatable adhesive substrate layer would have a polymeric fraction selected from the categories (a)-(d) of materials enumerated above, and would further contain one or more slip additives in the form of stearamide, erucylamide, oleyl palmitamide, and stearyl stearamide, with the total amount of such slip additives in the surface printable layer and adhesive substrate layer being from 0.50 to 1.0 percent by weight of the combined weights of the surface printable layer and adhesive substrate layer.

In general terms, the thicknesses of the respective layers and the amounts and types of slip additives contained in each will be tailored to enhance or at least not cumulatively significantly adversely affect the performance of the labelstock in aspects other than die-cuttability and the prevention of edge-welding, the slip additives again however being generally present in the surface printable and adhesive substrate layers in an amount of from 0.15 to 1.0 percent by weight of the combined weight of these layers.

The embodiments which have been described reflect the discovery that the provision of slip additives in the outer layers of an extrudable film labelstock can impart a resistance to edge welding in sheets formed from the extruded labelstock when the sheets are die cut on a high type die cutter in an in-mold labeling process. The use of film materials and labelstocks which had previously proven too extensible to be of economically practical value in such processes, such as high density polyethylene film labelstocks, for example, is thus enabled. The specific embodiments detailed above are thought to reflect several useful applications of this discovery wherein contact clarity, surface smoothness, and the amenability of the labelstocks to printing are not significantly compromised.

It will accordingly be understood that numerous other labelstock constructions are within the spirit of the present invention, and are within the design skills of a person of skill in the art to which the present invention most closely pertains. For surface printable layers and supporting or heat activatable adhesive substrate layers comprised of different materials than those specified above, it may be found for example that certain slip additives may be more effective in achieving a desired concentration of such additives adjacent a first or second outer surface. In this manner, lesser amounts of the slip additives are necessary to achieve the desired edge-weld inhibiting concentration at an interface between the surface printable layer of a first sheet of labelstock and the support layer of an adjacent second stacked sheet.

Or, it may be that certain slip additives are desirably incorporated in a surface printable layer in greater concentrations than the same or other slip additives in the support layer, although typically from considerations of printability the slip additives will be present in the support layer in significantly greater concentrations and may be incorporated substantially exclusively therein if the balance of other properties of interest suggests.

It is also to be understood that the extrudable film labelstocks of the present invention may desirably comprise other layers in addition to a surface printable layer and a supporting or heat activatable adhesive substrate layer, such as a regrind or recycle layer in the manner of United States Patent No. 4,837,075. The film labelstocks of the present invention may thus contain a surface printable layer either alone or in combination with a supporting layer carrying all or some of the slip additives, or may comprise the surface printable layer with a supporting layer and a number of intervening layers wherein slip additives may or may not be distributed, dependent on whether the slip additives are incorporated only in the materials comprising the supporting and surface printable layers or in the materials of the other layers as well. Each of these variations is considered to be within the scope and spirit of the present invention.

The processes and apparatus by which the materials of the various layers in a film labelstock of the present invention may be combined, and by which the labelstock may be extruded, sheeted, stacked, and die cut are conventional and well known to the art. The processes and apparatus by which the labels may then be dispensed for in-mold labeling to various molds and applied to articles formed in such molds are also well known, and need not be discussed in greater detail herein.

The invention is further illustrated by the following examples:

### Example 1

In this example a 5.0 mil (127.0 µm) thick two-layer labelstock was constructed by a cast film coextrusion of a surface printable layer and a heat activatable adhesive substrate layer. The surface printable layer comprised a mixture of 85.0 percent by weight of high density polyethylene (with a density in the range of .958 to .965 grams per cubic centimeter and a melt flow rate of from 4 to 10 grams per 10 minutes per ASTM 1238, condition E), 7.5 percent by weight of titanium dioxide, and 7.5 percent by weight of low density polyethylene (density of .922 grams per cubic centimeter, and a melt flow rate of 1.15 grams per 10 minutes per ASTM 1238, condition E). The heat activatable adhesive substrate layer was comprised of: 84.0 percent by weight of an ethylene-vinyl acetate copolymer having a vinyl acetate content of 23 mol percent and a melt flow rate as determined by ASTM 1238 of 5.5 grams per 10 minutes; 10.0 percent by weight of a second ethylene-vinyl acetate copolymer having a vinyl acetate content of 28 mol percent and a melt flow rate of 6.0; 4.32 percent by weight of an ethylene-vinyl acetate copolymer having a vinyl acetate content of 18 percent and a melt flow rate of 2.5 grams per 10 minutes; 1.2 percent by weight of silicon dioxide; and equal amounts at 0.24 percent by weight each of stearamide and erucylamide. The surface printable layer comprised 85 percent of the approximately 5.0 mil (127.0 µm) thickness of the labelstock as extruded, with the other 15 percent comprising the adhesive substrate layer.

The labelstock as thus constituted was sheeted, stacked and die cut on a high type die cutter. An inspection of a die cut stack of 50 sheets of the labelstock revealed that none of the sheets edge welded to the extent of being incapable of being individually dispensed, while an identically constructed and processed labelstock omitting the slip additives showed edge welding between 100 percent of the stacked sheets.

### Example 2

In this example an approximately 4.5 mil (114.3 µm) thick surface printable film layer was constructed by a blown film process. The surface printable film layer was comprised of a mixture of 71.0 percent by weight of the low density polyethylene described and used in Example 1, 24.0 percent by weight of the high density polyethylene of Example 1, 0.2 percent by weight each of stearamide and erucylamide, 1.0 percent by weight of silicon dioxide, and 3.6 percent by weight of the ethylene-vinyl acetate copolymer used in Example 1 and having a vinyl acetate content of 18 mol percent and a melt flow rate of 2.5 grams per 10 minutes. On stacking, sheeting and die cutting in accordance with the treatment of the labelstock of Example 1, none of the 50 stacked sheets showed edge-welding of a significant extent to adjacent sheets. A comparison surface printable film layer which was identically manufactured and processed, and which differed from the first layer only in the omission of the slip additives and its replacement by an equivalent amount by weight of the low density polyethylene, showed edge welding between 90 percent of the layers.

The above examples demonstrate that the labelstocks of the present invention are significantly less susceptible to edge welding than equivalent labelstocks not containing the slip additives, and further that wholly extruded labelstocks with surface printable, mostly high density polyethylene layers and heat activatable adhesive substrate layers are capable of being made which do not exhibit a perceptible degree of edge-welding at all.

## Claims

1. A film labelstock characterized by a tensile ultimate elongation of at least 10 percent in one or both of the machine and transverse directions when measured according to ASTM D-882, having a surface printable layer comprising a thermoplastic materials fraction selected from the group consisting of homopolymers of the olefins, copolymers of two or more of the olefins, and mixtures of such homopolymers and/or copolymers and having additionally one or more slip additives incorporated in the labelstock.

2. A labelstock as defined in claim 1, characterized by a tensile ultimate elongation of at least 50 percent in one or both of the machine and transverse directions when measured according to ASTM D-882.

3. A labelstock as defined in any of claims 1 and 2, wherein the thermoplastic materials fraction of the surface printable layer is low density polyethylene, medium density polyethylene, high density polyethylene, or mixtures thereof.

4. A label stock as defined in claim 3, wherein the thermoplastic materials fraction of the surface printable layer is at least 25 percent by weight of high density polyethylene.

5. A labelstock as defined in any of claims 1 to 4, wherein the surface printable layer further includes from 0 to 20 percent by weight of a pigment.

6. A labelstock as defined in any of claims 1 to 5, wherein the one or more slip additives are selected from the group consisting of stearamide, erucylamide, oleyl palmitamide, and stearyl stearamide.

7. A labelstock as defined in claim 6, wherein the surface printable layer has incorporated therein from 0.15 to 1.0 percent by weight of the one or more slip additives.

8. A label stock as defined in claim 7, wherein the surface printable layer has incorporated therein from 0.25 to 1.0 percent by weight of the one or more slip additives.

9. A labelstock as defined in claim 8, wherein the surface printable layer has incorporated therein from 0.50 to 1.0 percent by weight of the one or more slip additives.

10. A labelstock as defined in any of claims 1 to 6, which comprises:
a surface printable layer of a first film material defining a first outer surface of the film labelstock, and
a supporting layer of a second film material defining a second opposing outer surface of the film labelstock, whereby the surface printable layer of a first sheet and the supporting layer of an adjacent second sheet are placed in intimate contact with one another when the film labelstock is sheeted and stacked,
and wherein the surface printable layer and the supporting layer of the film labelstock collectively contain in said first and second film materials one or more slip additives.

11. A labelstock as defined in claim 10, wherein the supporting layer is a heat activatable adhesive substrate layer, and further wherein the second film material of the heat activatable adhesive substrate layer includes a polymeric fraction selected from the group consisting of: (a) homopolymers of ethylene, (b) copolymers of ethylene with one or more alpha olefins having from 4 to 8 carbons, (c) mixtures of (a) and (b), and (d) mixtures of either (a), (b), or (c) with up to 95 percent by weight of one or more copolymers of ethylene and from 1 percent to 30 percent by weight of a copolymerizable ethylenically unsaturated carboxylic acid or ester containing comonomer.

12. A labelstock as defined in claim 11, with the polymeric fraction being selected from the group consisting of the (d) mixtures wherein the carboxylic acid or ester containing comonomer is vinyl acetate.

13. A labelstock as defined in claim 12, wherein the polymeric fraction is selected from mixtures containing more than 35 percent of one or more ethylene-vinyl acetate copolymers by weight.

14. A labelstock as defined in any of claims 11 to 13, wherein the one or more slip additives in the surface printable layer and in the supporting layer are present therein in a combined amount of from 0.15 to 1.0 percent by weight, based on the combined weights of the surface printable layer and the supporting layer.

15. A labelstock as defined in claim 14, wherein the one or more slip additives are incorporated in the supporting layer at a significantly greater concentration than in the surface printable layer.

16. A labelstock as defined in claim 15, wherein the one or more slip additives are incorporated substantially exclusively in the supporting layer.

17. A label manufactured from the film labelstocks of any of claims 1 to 16.

18. A label as defined in claim 17 which has been printed upon at an inner surface of the surface printable layer relative to an article to which the label is to be applied.

19. An article to which has been applied a label as defined in claim 17 or 18.

20. A process for inhibiting edge-welding in the die cutting on a high type die cutter of stacked sheets of an extrudable film material characterized by a tensile ultimate elongation of at least 10 percent in one or both of the machine and transverse directions when measured according to ASTM D-882, comprising the step of incorporating in the film material one or more slip additives.

## Patentansprüche

1. Ausgangsmaterial für Folienetiketten, gekennzeichnet durch eine maximale Zugdehnung von wenigstens 10 % in einer Richtung oder sowohl der Maschinenrichtung als auch senkrecht dazu, gemessen nach ASTM D-882, mit einer auf der Oberfläche bedruckbaren Schicht, die eine Fraktion aus einem thermoplastischen Material enthält, ausgewählt aus der Gruppe, bestehend aus Homopolymeren von Olefinen, Copolymeren von zwei oder mehreren Olefinen und Mischungen solcher Homopolymere und/oder Copolymere, und mit zusätzlich einem oder mehreren Gleitmitteln, die in das Ausgangsmaterial für Etiketten eingebracht sind.

2. Ausgangsmaterial für Etiketten, wie in Anspruch 1 definiert, gekennzeichnet durch eine maximale Zugdehnung von wenigstens 50 % in einer Richtung oder sowohl der Maschinenrichtung als auch senkrecht dazu, gemessen nach ASTM D-882.

3. Ausgangsmaterial für Etiketten, wie in einem der Ansprüche 1 und 2 definiert, wobei die Fraktion des thermoplastischen Materials der auf der Oberfläche bedruckbaren Schicht Polyethylen niedriger Dichte, Polyethylen mittlerer Dichte, Polyethylen hoher Dichte oder Mischungen davon ist.

4. Ausgangsmaterial für Etiketten, wie in Anspruch 3 definiert, wobei die Fraktion des thermoplastischen Materials für die auf der Oberfläche bedruckbare Schicht zu wenigstens 25 Gew.-% aus Polyethylen hoher Dichte besteht.

5. Ausgangsmaterial für Etiketten, wie in einem der Ansprüche 1 bis 4 definiert, wobei die auf der Oberfläche bedruckbare Schicht weiterhin 0 bis 20 Gew.-% eines Pigments enthält.

6. Ausgangsmaterial für Etiketten, wie in einem der Ansprüche 1 bis 5 definiert, wobei das eine oder die mehreren Gleitmittel ausgewählt sind aus der Gruppe, bestehend aus Stearamid, Erucylamid, Oleylpalmitamid und Stearylstearamid.

7. Ausgangsmaterial für Etiketten, wie in Anspruch 6 definiert, wobei die auf der Oberfläche bedruckbare Schicht darin 0,15 bis 1,0 Gew.-% des einen oder der mehreren Gleitmittel enthält.

8. Ausgangsmaterial für Etiketten, wie in Anspruch 7 definiert, wobei die auf der Oberfläche bedruckbare Schicht darin 0,25 bis 1,0 Gew.-% des einen oder der mehreren Gleitmittel enthält.

9. Ausgangsmaterial für Etiketten, wie in Anspruch 8 definiert, wobei die auf der Oberfläche bedruckbare Schicht darin 0,50 bis 1,0 Gew.-% des einen oder der mehreren Gleitmittel enthält.

10. Ausgangsmaterial für Etiketten, wie ein einem der Ansprüche 1 bis 6 definiert, welches enthält:
eine auf der Oberfläche bedruckbare Schicht eines ersten Folienmaterials, das eine erste äußere Oberfläche des Ausgangsmaterials für Etikettfolien definiert, und
eine Tragschicht aus einem zweiten Folienmaterial, das eine zweite gegenüberliegende äußere Oberfläche des Ausgangsmaterials für Etikettfolien definiert, wobei die auf der Oberfläche bedruckbare Schicht einer ersten Folie und die Tragschicht einer benachbarten zweiten Folie in innigen Kontakt zueinander angeordnet sind, wenn das Ausgangsmaterial für Folienettiketten zu Folien verarbeitet wird und übereinander geschichtet wird,
und wobei die auf der Oberfläche bedruckbare Schicht und die Tragschicht des Ausgangsmaterials für Folienetiketten zusammen in diesen ersten und zweiten Folienmaterialien ein oder mehrere Gleitmittel enthalten.

11. Ausgangsmaterial für Folienetiketten, wie in Anspruch 10 definiert, wobei die Tragschicht eine durch Wärme aktivierbare klebende Tragschicht ist und wobei weiterhin das zweite Folienmaterial der durch Wärme aktivierbaren klebenden Tragschicht eine polymere Fraktion, ausgewählt aus der Gruppe, bestehend aus: (a) Homopolymeren von Ethylen, (b) Copolymeren von Ethylen mit einem oder mehreren α-Olefinen mit 4 bis 8 Kohlenstoffatomen, (c) Mischungen von (a) und (b) und (d) Mischungen von entweder (a), (b) oder (c) mit bis zu 95 Gew.-% eines oder mehrerer Copolymere aus Ethylen und 1 bis 30 Gew.-% eines copolymerisierbaren ethylenisch ungesättigten carbonsäure- oder esterhaltigen Comonomers, enthält.

12. Ausgangsmaterial für Etiketten, wie in Anspruch 11 definiert, wobei die polymere Fraktion aus der Gruppe, bestehend aus der (d)-Mischung, ausgewählt ist, wobei das carbonsäure- oder esterhaltige Comonomer Vinylacetat ist.

13. Ausgangsmaterial für Etiketten, wie in Anspruch 12 definiert, wobei die polymere Fraktion ausgewählt ist aus Mischungen, die mehr als 35 Gew.-% eines oder mehrerer Ethylen-Vinylacetat-Copolymere enthalten.

14. Ausgangsmaterial für Etiketten, wie in einem der Ansprüche 11 bis 13 definiert, wobei das eine oder die mehreren Gleitmittel in der auf der Oberfläche bedruckbaren Schicht und in der Tragschicht in einer Gesamtmenge von 0,15 bis 1,0 Gew.-%, bezogen auf das Gesamtgewicht der auf der Oberfläche bedruckbaren Schicht und der Tragschicht, vorhanden sind.

15. Ausgangsmaterial für Etiketten, wie in Anspruch 14 definiert, wobei das eine oder die mehreren Gleitmittel in der Tragschicht in einer deutlich größeren Konzentration als in der auf der Oberfläche bedruckbaren Schicht eingebracht sind.

16. Ausgangsmaterial für Etiketten, wie in Anspruch 15 definiert, wobei das eine oder die mehreren Gleitmittel im wesentlichen ausschließlich in der Tragschicht eingebracht sind.

17. Etikett, hergestellt aus dem Ausgangsmaterial für Folienetiketten nach einem der Ansprüche 1 bis 16.

18. Etikett, wie in Anspruch 17 definiert, das an der inneren Oberfläche der auf der Oberfläche bedruckbaren Schicht relativ zu einem Gegenstand, auf dem das Etikett aufbracht wird, bedruckt worden ist.

19. Gegenstand, auf den ein Etikett, wie in Anspruch 17 oder 18 definiert, aufgebracht worden ist.

20. Verfahren zur Verhinderung des Kantenverschweißens beim Formschneiden von übereinandergeschichteten Folien eines extrudierbaren Folienmaterials, das durch eine maximale Zugdehnung von wenigstens 10 % in einer Richtung oder sowohl in der Maschinenrichtung als auch senkrecht dazu, gemessen nach ASTM D-882, charakterisiert ist, mit einem High-Type Formschneider, umfassend den Schritt des Einbringens eines oder mehrerer Gleitmittel in das Folienmaterial.

## Revendications

1. Matériau brut pour étiquettes sous forme de film, caractérisé par un allongement à la rupture en traction d'au moins 10 % dans une direction ou dans les deux directions machine et transversale, quand on le mesure selon la norme ASTM D-882, présentant une couche imprimable de surface qui comprend une fraction de matériaux thermoplastiques choisis dans l'ensemble constitué par les homopolymères d'oléfines, les copolymères de deux ou plus de deux oléfines, et des mélanges de tels homopolymères et/ou copolymères, et présentant en outre un ou plusieurs additifs de lubrification incorporés dans le matériau brut pour étiquettes.

2. Matériau brut pour étiquettess conforme à la revendication 1, caractérisé par un allongement à la rupture en traction d'au moins 50 % dans une direction ou les deux directions machine et transversale, quand on le mesure selon la norme ASTM D-882.

3. Matériau brut pour étiquettes conforme à l'une quelconque des revendications 1 et 2, dans lequel la fraction de matériaux thermoplastiques formant la couche imprimable de surface est un polyéthylène basse densité, un polyéthylène moyenne densité, un polyéthylène haute densité, ou des mélanges de ces derniers.

4. Matériau brut pour étiquettes conforme à la revendication 3, dans lequel la fraction de matériaux thermoplastiques formant la couche imprimable de surface, vaut au moins 25 % en poids de polyéthylène haute densité.

5. Matériau brut pour étiquettes conforme à l'une quelconque des revendications 1 à 4, dans lequel la couche imprimable de surface comprend en outre de 0 à 20 % en poids d'un pigment.

6. Matériau brut pour étiquettes conforme à l'une quelconque des revendications 1 à 5, dans lequel l'additif ou les additifs de lubrification sont choisis dans l'ensemble constitué par le stéaramide, l'érucylamide, l'oléylpalmitide et le stéarylstéaramide.

7. Matériau brut pour étiquettes conforme à la revendication 6, dans lequel on incorpore de 0,15 à 1,0 % en poids de l'additif ou des additifs de lubrification dans la couche imprimable de surface.

8. Matériau brut pour étiquettes conforme à la revendication 7, dans lequel on incorpore de 0,25 à 1,0 % en poids de l'additif ou des additifs de lubrification dans la couche imprimable de surface.

9. Matériau brut pour étiquettes conforme à la revendication 8, dans lequel on incorpore de 0,50 à 1,0 % en poids de l'additif ou des additifs de lubrification dans la couche imprimable de surface.

10. Matériau brut pour étiquettes conforme à l'une quelconque des revendications 1 à 6, qui comprend :
une couche imprimable de surface formée par un premier matériau de film constituant une première surface externe du matériau brut pour étiquettes sous forme de film, et
une couche de support formée par un second matériau de film constituant une seconde surface externe opposée du matériau brut pour étiquettes sous forme de film, la couche imprimable de surface formée par une première feuille et la couche de support formée par une seconde feuille adjacente sont donc placées en contact intime l'une avec l'autre quand le matériau brut pour étiquettes sous forme de film est mis sous forme de feuille et gerbé,
et dans lequel la couche imprimable de surface et la couche de support formant le matériau brut pour étiquettes sous forme de film, contiennent en commun, dans lesdits premier et second matériaux de films, un ou plusieurs additifs de lubrification.

11. Matériau brut pour étiquettes conforme à la revendication 10, dans lequel la couche de support est une couche de substrat adhésive thermoactivable, et en outre dans lequel le second matériau de film formant la couche de substrat adhésive thermoactivable comprend une fraction polymérique choisie dans l'ensemble constitué par (a) des homopolymères d'éthylène, (b) des copolymères d'éthylène et d'une ou de plusieurs α-oléfines comportant de 4 à 8 atomes de carbone, (c) des mélanges de (a) et de (b), et (d) des mélanges de (a), (b) ou (c) avec jusqu'à 95 % en poids d'un ou plusieurs copolymères d'éthylène et de 1 à 30 % en poids d'un comonomère copolymérisable contenant un ester ou un acide carboxylique à insaturation éthylénique .

12. Matériau brut pour étiquettes conforme à la revendication 11, présentant une fraction polymérique qui est choisie dans l'ensemble constitué par (d) des mélanges dans lesquels le comonomère contenant un ester ou un acide carboxylique est l'acétate de vinyle.

13. Matériau brut pour étiquettes conforme à la revendication 12, dans lequel la fraction polymérique est choisie parmi des mélanges contenant plus de 35 % en poids d'un ou de plusieurs copolymères éthylène/acétate de vinyle.

14. Matériau brut pour étiquettes conforme à l'une quelconque des revendications 11 à 13, dans lequel l'additif ou les additifs de lubrification dans la couche imprimable de surface et dans la couche de support, sont présents dedans en une quantité combinée de 0,15 à 1,0 % en poids, par rapport aux poids combinés de la couche imprimable de surface et de la couche de support.

15. Matériau brut pour étiquettes conforme à la revendication 14, dans lequel on incorpore l'additif ou les additifs de lubrification dans la couche de support en une concentration significativement plus grande que dans la couche imprimable de surface.

16. Matériau brut pour étiquettes conforme à la revendication 15, dans lequel on incorpore l'additif ou les additifs de lubrification pratiquement exclusivement dans la couche de support.

17. Etiquette fabriquée à partir des matériaux bruts pour étiquettes sous forme de film conformes à l'une quelconque des revendications 1 à 16.

18. Etiquette conforme à la revendication 17, qui a été imprimée sur une surface interne de la couche imprimable de surface en ce qui concerne un article sur lequel l'étiquette doit être appliquée.

19. Article sur lequel a été appliquée une étiquette conforme à la revendication 17 ou 18.

20. Procédé pour inhiber le soudage latéral dans le découpage à l'emporte-pièce sur un outil de coupe à l'emporte-pièce de type élevé, de feuilles gerbées formées par un matériau de film extrudable caractérisé par un allongement à la rupture en traction d'au moins 10 % dans une direction ou dans les deux directions machine et transversale, quand on le mesure selon la norme ASTM D-882, comprenant l'étape consistant à incorporer dans le matériau de film, un ou plusieurs additifs de lubrification.
